# EUROPEAN PATENT APPLICATION

(11) **EP 4 379 911 A1**
(43) Date of publication of application: **05.06.2024**
(21) Application number: 23756598.1
(22) Date of filing: 14.02.2023
(51) Int. Cl.: H01M 10/6567, H01M 10/613, H01M 50/519, H01M 50/569, H01M 50/507, H01M 50/24, H01M 50/253, H01M 50/204, H01M 50/262, H01M 10/48

(54) **BATTERY MODULE CONTAINING INSULATING OIL, AND BATTERY PACK COMPRISING SAME**

(30) Priority: 16.02.2022 KR 20220020203
(71) Applicant: LG Energy Solution, Ltd., Seoul 07335 (KR)
(72) Inventor: JU, Eun Ah, Daejeon 34122 (KR); SEO, Sung Won, Daejeon 34122 (KR); YUN, Hyeon Ki, Daejeon 34122 (KR); TANNENBERGER, Guenter, 85123 Pobenhausen (DE); HARASZTOSI, Uwe, 74172 Neckarsulm (DE); WASSERMANN, Thomas, 85290 Geisenfeld (DE)
(74) Representative: Goddar, Heinz J.
(86) International application number: PCT/KR2023/002130
(87) International publication number: WO 2023/158186

(57) **Abstract**

The present invention relates to a battery module including a battery cell stack comprising a plurality of battery cells, a module housing accommodating one or more of the battery cell stacks therein disposed in an overall length direction, a high voltage (HV) connector electrically connecting battery modules to each other, a low voltage (LV) assembly configured to sense the voltage and temperature of the plurality of battery cells, an insulating oil configured to cool the plurality of battery cells, and a cooling port configured to allow the insulating oil to be introduced and discharged therethrough, wherein the insulating oil directly cools the plurality of battery cells while the insulating oil flows through the module housing, whereby cooling efficiency and energy density are improved, and a battery pack including the same.

## Description

### [Technical Field]

This application claims the benefit of priority to Korean Patent Application No. 2022-0020203 filed on February 16, 2022, the disclosure of which is incorporated herein by reference in its entirety.

The present invention relates to a battery module including an insulating oil and a battery pack including the same. More particularly, the present invention relates to a battery module that has a simplified structure and includes an insulating oil injected into a sealed module housing so as to come into direct contact with a battery cell and a battery pack including the same.

### [Background Art]

A lithium secondary battery has been used as an energy source for wireless mobile devices, which are small multifunctional products, or wearable devices, which are worn on bodies, and has also been used as an energy source for electric vehicles and hybrid electric vehicles presented as alternatives to existing gasoline and diesel vehicles, which cause air pollution, or an energy storage system.

The temperature of the lithium secondary battery increases during charging and discharging thereof, and increase in temperature of a battery cell reduces the performance of the battery cell. In order to prevent the temperature of the battery cell from increasing to a dangerous temperature or higher, therefore, a part, such as a heat transfer member, a heat sink, or a cooling fin, made of a material that exhibits high thermal conductivity is provided in a battery pack such that heat of the battery cell is discharged out of the battery pack.

However, when the battery cell is indirectly cooled, as described above, improvement of cooling performance is limited.

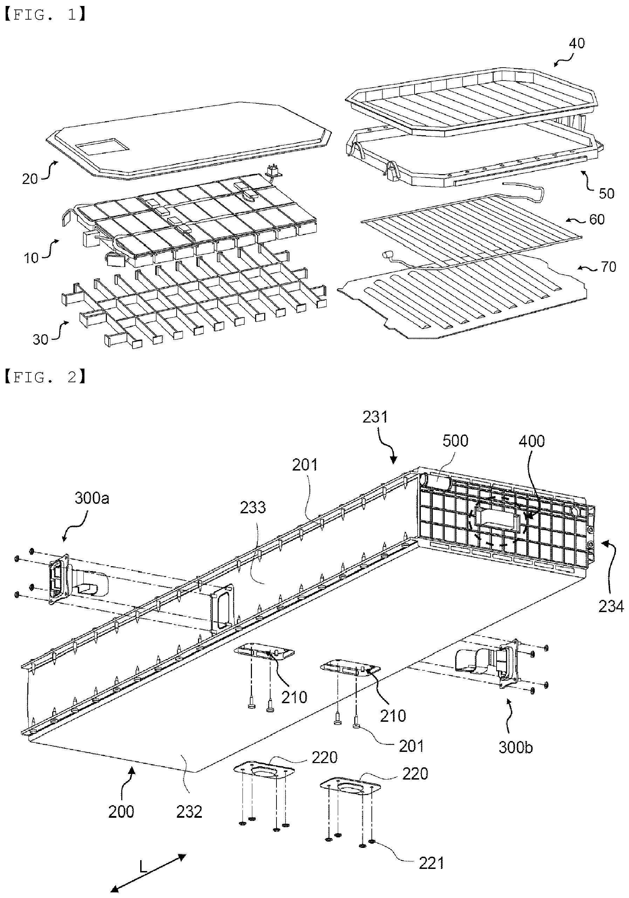

In addition, the conventional battery pack includes a plurality of parts made of metal materials, whereby the assembly process of the battery pack is complicated and the battery pack is heavy. In connection therewith, FIG. 1 is an exploded perspective view of the conventional battery pack.

Referring to FIG. 1, the battery pack includes a battery module 10, a crossbeam 30 located in the battery module 10, a pack tray 40, to which the battery module 10 and the crossbeam 30 are mounted, a lower cover 70 located under the pack tray 40, a pack frame 50 disposed so as to envelop the edge of the battery module 10, a cooling member 60 configured to cool the battery module, and a pack cover 20 located above the battery module 10.

Conventionally, in order to protect the battery module 10 in the battery pack from external impact and to secure safety thereof, parts, such as the crossbeam 30, the pack tray 40, the pack frame 50, the pack cover 20, and the lower cover 70, are necessary.

However, the parts are heavy and reduce energy density of the battery pack.

Therefore, there is a need for technology capable of simplifying parts of a battery pack to reduce the weight of the battery pack, improving energy density of the battery pack, and improving cooling efficiency of a battery cell.

In connection therewith, Patent Document 1 discloses a battery module having an insulating oil and a plurality of battery cells received therein, wherein the battery cells are completely immersed in the insulating oil, whereby it is possible to prevent sudden increase in temperature of the battery cells. However, the battery module of Patent Document 1 includes a heat pipe configured to absorb heat of the insulating oil when the temperature of the insulating oil increases and a heat dissipation block and a cooling fin configured to discharge the absorbed heat.

Consequently, Patent Document 1 does not disclose technology for implementing a battery pack with improved energy density.

Since the lithium secondary battery is used as a large-capacity, high-output energy source, as described above, there is a need for a battery module configured such that a battery cell is cooled, whereby safety of the battery cell is improved, and energy density of the battery module is improved.

### (Prior Art Document)

(Patent Document 1) Korean Registered Patent Publication No. 1834846 (2018.02.27)

### [Disclosure]

### [Technical Problem]

The present invention has been made in view of the above problems, and it is an object of the present invention to provide a battery module configured such that a battery cell is directly cooled, whereby cooling efficiency is improved, a high-rigidity module housing is provided, whereby some parts of the battery module may be omitted, and therefore energy density is improved, and a battery pack including the same.

### [Technical Solution]

A battery module according to the present invention to accomplish the above object includes a battery cell stack comprising a plurality of battery cells, a module housing accommodating one or more of the battery cell stacks therein disposed in an overall length direction, a high voltage (HV) connector electrically connecting battery modules to each other, a low voltage (LV) assembly configured to sense voltage and temperature of the plurality of battery cells, an insulating oil configured to cool the plurality of battery cells, and a cooling port configured to allow the insulating oil to be introduced and discharged therethrough, wherein the insulating oil directly cools the plurality of battery cells while the insulating oil flows through the module housing.

The module housing may include an upper surface, a lower surface, a first side surface, and a second side surface, and the HV connector may include a first HV connector located at the first side surface and a second HV connector located at the second side surface.

The battery cell stack may include a first battery cell stack and a second battery cell stack, a first electrode terminal of the first battery cell stack and a second electrode terminal of the second battery cell stack may be connected to the first HV connector, and a second electrode terminal of the first battery cell stack and a first electrode terminal of the second battery cell stack may be connected to the second HV connector.

The lower surface of the module housing has through-holes extending therethrough under connection portions at which the first HV connector and the second HV connector are connected to the first battery cell stack and the second battery cell stack, each of the through-holes having a sealing member attached thereto, each sealing member being configured to seal the respective through-hole.

The module housing may have connection portions extending therethrough to which the HV connector, the LV assembly, and the cooling port are connected, and each of the connection portions may include a sealing member configured to prevent leakage of the insulating oil.

The LV assembly may include an LV connector.

The LV assembly may further include at least one selected from the group consisting of a flexible printed circuit (FPC), a printed circuit board (PCB), or a cell management controller (CMC).

The present invention provides a battery pack including the battery module, the battery pack including a plurality of battery modules disposed such that side surfaces of module housings are disposed adjacent to each other, a battery disconnect unit (BDU) disposed at one side of the plurality of battery modules, and a battery pack frame enveloping the plurality of battery modules and the BDU, wherein each of the plurality of battery modules is electrically connected to a corresponding one of the plurality of battery modules adjacent thereto via an HV connector, and the BDU is connected to the HV connector of the battery module adjacent thereto.

Each of the module housings may include a respective screw fastening portion provided at each of a first side surface and a second side surface, and the plurality of battery modules may be connected to each other by a screw coupled to the respective screw fastening portions.

Each of the plurality of battery modules may include an LV assembly coupled to all battery cell stacks, and the LV assembly may be connected to a battery management system (BMS).

The battery pack may further include an insulating oil introduction and discharge channel including at least one of a series connection structure or a parallel connection structure among the plurality of battery modules.

Each of the plurality of battery modules may have a structure in which an upper surface and a lower surface of the module housing are exposed in the state in which the plurality of battery modules is mounted in the battery pack frame.

The battery pack frame may have connection openings formed at positions corresponding to HV connectors and LV assemblies mounted to the plurality of battery modules.

The battery pack frame may include a first member, a second member, a third member, and a fourth member connected perpendicularly to each other.

In addition, the present invention may provide various combinations of the above constructions.

### [Advantageous Effects]

As is apparent from the above description, in the present invention, an insulating oil is injected into a battery module to directly cool a battery cell, whereby cooling efficiency is improved.

In addition, a cooling member is omitted except the insulating oil, whereby it is possible to provide a lightweight high-energy-density battery module and battery pack.

In addition, a high-rigidity module housing is provided, whereby conventional reinforcement parts used when a battery pack is assembled are omitted, and therefore it is possible to reduce manufacturing cost.

In addition, a structure in which a plurality of battery modules is electrically connected to each other is efficiently configured, whereby it is possible to simplify a manufacturing process.

### [Description of Drawings]

FIG. 1 is an exploded perspective view of a conventional battery pack.
FIG. 2 is a perspective view of a battery module according to the present invention.
FIG. 3 is a plan see-through view showing connection between a plurality of battery modules via a high voltage (HV) connector.
FIG. 4 is a partial enlarged view of an HV connector of FIG. 2.
FIG. 5 is a partial exploded perspective view of the battery module of FIG. 2.
FIG. 6 is a partial perspective view of the battery module of FIG. 2.
FIG. 7 is an enlarged view of the part of the battery module of FIG. 2 to which a cooling port is coupled.
FIG. 8 is a perspective view showing a plurality of battery modules according to the present invention.
FIG. 9 is a front view of a module housing according to an embodiment.
FIG. 10 is a front view of a module housing according to another embodiment.
FIG. 11 is a perspective view of a battery pack according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the accompanying drawings.

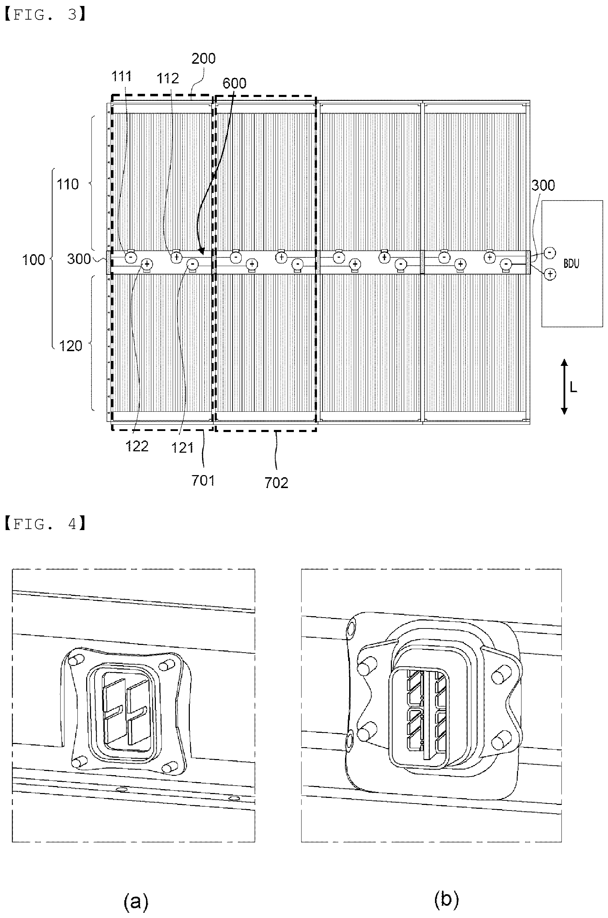

FIG. 2 is a perspective view of a battery module according to the present invention, and FIG. 3 is a plan see-through view showing connection between a plurality of battery modules via a high voltage (HV) connector.

Referring to FIGs. 2 and 3, the battery module according to the present invention includes a battery cell stack 100 constituted by a plurality of battery cells, a module housing 200 configured to receive two battery cell stacks 100 disposed side by side in an overall length direction L, an HV connector 300 configured to electrically connect battery modules to each other, a low voltage (LV) assembly 400 configured to sense the voltage and temperature of the plurality of battery cells, an insulating oil 600 configured to cool the plurality of battery cells, and a cooling port 500 configured to allow the insulating oil 600 to be introduced and discharged therethrough.

The LV assembly 400 may be variously configured depending on the construction of the battery module. The kind of components constituting the LV assembly is not particularly restricted as long as the LV assembly is configured to connect the battery cell stacks to a battery management system (BMS) and to sense the voltage and temperature of the battery cell.

For example, the LV assembly may include a busbar connected to an electrode lead of the battery cell stack, a flexible printed circuit (FPC) coupled to the busbar, a printed circuit board (PCB) connected to the FPC, a cell management controller (CMC) connected to the PCB, and a low voltage (LV) connector coupled to the CMC.

The BMS may manage the battery cell in order to prevent overcharging and to maintain uniform voltage, and a battery disconnect unit (BDU) may function to stably supply power of the battery cell or block the power.

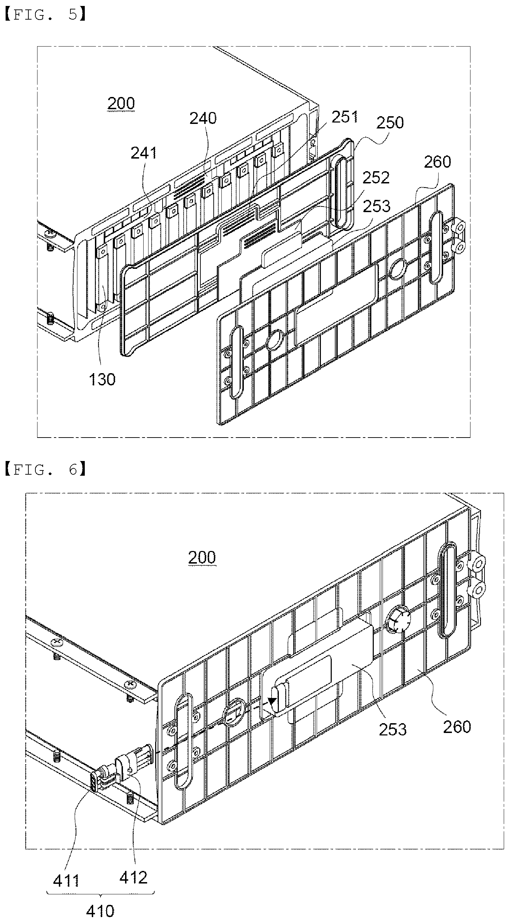

The construction of the PCB and the CMC is shown in FIG. 5.

A plurality of battery modules constituting a battery pack is connected to each other via an LV line connected to the LV connector, and the LV line is connected to the BMS. Since connection between the battery cell stack and the BMS is achieved through the LV assembly, as described above, it is possible to sense the voltage and temperature of the battery cells and to control and manage the battery cells.

In the present invention, the insulating oil 600 is injected into the module case through the cooling port 500, whereby the insulating oil 600 may come into direct contact with the battery cell. When the low-temperature insulating oil is injected into the module housing, therefore, the insulating oil may directly cool the plurality of battery cells while flowing in the module housing. Consequently, it is possible to remarkably improve cooling efficiency, compared to a conventional structure in which the battery cell is indirectly cooled using a heat transfer member and a cooling fin.

As described above, the battery module according to the present invention has a structure in which the insulating oil is introduced into or discharged from the module housing through the cooling port. Consequently, the module housing may be hermetically sealed such that the insulating oil does not leak to the remaining parts of the module housing excluding the cooling port.

To this end, a sealing member configured to prevent leakage of the insulating oil may be coupled to parts of the module housing to which the HV connector 300, the LV assembly 400, and the cooling port 500 are connected. For example, the HV connector 300, the LV assembly 400, and the cooling port 500 may be coupled to the module housing in the state in which an 0 ring is added to each of the HV connector, the LV assembly, and the cooling port.

The module housing 200 is configured so as to have a mono-frame structure in which four rectangular surfaces are disposed perpendicular to each other. The module housing includes an upper surface 231, a lower surface 232, a first side surface 233, and a second side surface 234. The HV connector 300 includes a first HV connector 300a located at the first side surface 233 and a second HV connector 300b located at the second side surface 234.

In the present invention, the two battery cell stacks may be disposed in the module housing extending long in the overall length direction so as to be located in the overall length direction. The battery module of FIG. 3 includes a first battery cell stack 110 and a second battery cell stack 120.

An HV busbar is disposed in a space in which the first battery cell stack 110 and the second battery cell stack 120 face each other, which is a central part of the module housing in the overall length direction, and a first electrode terminal and a second electrode terminal of each of the battery cell stacks extend in a direction toward the HV busbar and are coupled to the HV busbar.

Specifically, a first electrode terminal 111 of the first battery cell stack 110 and a second electrode terminal 122 of the second battery cell stack 120 are connected to the first HV connector 300a, and a second electrode terminal 112 of the first battery cell stack 110 and a first electrode terminal 121 of the second battery cell stack 120 are connected to the second HV connector 300b. The first electrode terminal and the second electrode terminal may be connected to the HV connectors via the HV busbar.

The first electrode terminals 111 and 121 are formed as the result of coupling between electrode leads of first electrodes constituting the battery cell stack, and the second electrode terminals 112 and 122 are formed as the result of coupling between electrode leads of second electrodes constituting the battery cell stack. The first electrode and the second electrode are electrodes having different polarities. The first electrode and the second electrode may be a positive electrode and a negative electrode, respectively, or may be a negative electrode and a positive electrode, respectively.

In the present invention, the plurality of battery modules constituting the battery pack is electrically connected to each other in a state of being disposed adjacent to each other. For example, when a first battery module 701 and a second battery module 702 are located adjacent to each other, the first battery module 701 and the second battery module 702 may be electrically connected to each other via the HV connector 300. That is, the second HV connector 300b of the first battery module 701 and the first HV connector 300a of the second battery module 702 may be directly connected to each other, whereby electrical connection between the first battery module and the second battery module may be achieved.

The second HV connector 300b of the first battery module 701 and the first HV connector 300a of the second battery module 702 may be located adjacent to each other such that the second HV connector 300b of the first battery module 701 and the first HV connector 300a of the second battery module 702 are directly coupled to each other.

When the HV connector is disposed so as to be located at opposite ends of the module housing in the overall length direction L, unlike FIGs. 2 and 3, the construction for connection between the electrode terminals of the two battery modules may be complicated and inefficient.

In the present invention, members of the battery pack, such as an upper cover and a lower cover, are not provided outside the upper surface 231 and the lower surface 232 of the module housing 200, whereby the upper surface 231 and the lower surface 232 of the module housing are exposed in the state in which the battery pack is assembled.

In addition, the first HV connector 300a and the second HV connector 300b are mounted in the module housing 200 in a state of being disposed so as to extend through the module housing 200. Parts of the module housing at which the first HV connector 300a and the second HV connector 300b are disposed must be completely sealed. After the first HV connector 300a and the second HV connector 300b are coupled to the first electrode terminal and the second electrode terminal, therefore, the battery cell stacks cannot be received in the module housing.

In the present invention, the battery cell stacks are received in the module housing, and the first electrode terminal and the second electrode terminal are coupled to coupling portions of the first HV connector 300a and the second HV connector 300b in the state in which the first HV connector 300a and the second HV connector 300b are inserted into the module housing from the outside of the module housing. To this end, through-holes 210 are formed in the lower surface 232 of the module housing 200 under connection portions at which the first HV connector 300a and the second HV connector 300b are connected to the first battery cell stack 110 and the second battery cell stack 120.

The first electrode terminal and the second electrode terminal are coupled respectively to the coupling portion of the first HV connector 300a and the coupling portion of the second HV connector 300b through the through-holes 210. After coupling is completed, a sealing member 220 configured to cover each of the through-holes 210 may be coupled to the module housing using screws 221, whereby the through-holes 210 may be sealed.

FIG. 4 is a partial enlarged view of the HV connector of FIG. 2.

Referring to FIG. 4, the first HV connector shown in (a) is a male connector, the second HV connector shown in (b) is a female connector, and the male connector and the female connector are connected to each other. In the state in which a plurality of battery modules is disposed side by side, therefore, the first HV connector of one of the battery modules may be coupled to the second HV connector of another of the battery modules adjacent thereto, whereby electrical connection therebetween may be achieved.

FIG. 5 is a partial exploded perspective view of the battery module of FIG. 2, and FIG. 6 is a partial perspective view of the battery module of FIG. 2.

Referring to FIGs. 5 and 6, a PCB 240 may be attached to one end of the battery cell stack received in the module housing 200 to measure and manage the voltage and temperature of the battery cells. A sealing plate 250 configured to prevent leakage of the insulating oil is coupled to each of opposite ends of the module housing 200 in the overall length direction, and an end plate 260 is coupled to the outside of the sealing plate 250.

The sealing plate 250 includes a PCB coupling portion 251 connected to the PCB 240, and a CMC 252 connected to the PCB coupling portion 251 is located between the sealing plate 250 and the end plate 260.

The CMC is connected to the PCB, which is connected to the battery cell, to measure the voltage and temperature of the battery cell. The CMC is connected to the BMS while being connected to a CMC of another battery module.

A CMC cover 253 is coupled to the outside of the CMC 252 so as to cover the CMC 252, and the CMC cover 253 protrudes outside the end plate 260 through a through-hole formed in the end plate 260.

However, the LV assembly may be configured such that the CMC is omitted depending on design of the battery module. Even in this case, connection between the LV assembly and the BMS through the LV line connected to the LV connector may be achieved.

The LV assembly 400, which is a component configured to connect the battery cells constituting the battery cell stack to the BMS, is constituted by a busbar 130 connected to the battery cells, an FPC 241, a PCB 240, a CMC 252, and an LV connector 410, which are sequentially connected to each other. The LV connector 410 includes a terminal portion 411 and a terminal portion cover 412, to which the terminal portion 411 is mounted, and the LV connector 410 is coupled to the CMC 252 in the state in which the terminal portion 411 is mounted to the terminal portion cover 412.

However, the LV assembly 400 may be configured so as to be different from what is shown in FIGs. 5 and 6 depending on the construction of the battery module. On the premise that the battery cell stack is connected to the BMS to sense the voltage and temperature of the battery cell, at least one of the FPC, the PCB, and the CMC may be omitted.

The CMC cover 253 is coupled to the CMC 252 so as to envelop the CMC 252 and the LV connector 410, whereby the coupling portion of the LV connector 410 in the module housing is sealed. Specifically, the CMC cover 253 may be coupled to the CMC in the state in which an O ring is added to the CMC cover, whereby it is possible to prevent leakage of the insulating oil.

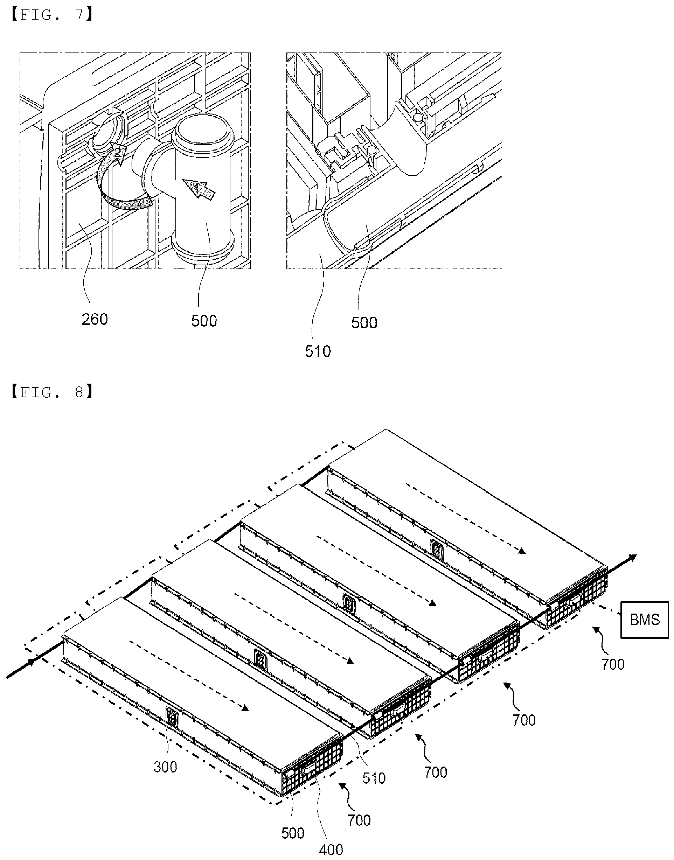

FIG. 7 is an enlarged view of the part of the battery module of FIG. 2 to which the cooling port 500 is coupled.

Referring to FIG. 7, the cooling port 500 may be primarily coupled to a cooling port mounting portion formed in the end plate 260 and may be secondarily rotated 90 degrees, whereby coupling of the cooling port may be completed. A cooling line 510 may be coupled to the cooling port 500 thus coupled, whereby injection and discharge of the insulating oil may be performed. In a structure in which a plurality of battery modules is coupled to each other, the insulating oil may be injected into and discharged from the plurality of battery modules along the cooling line 510.

Alternatively, a part of the cooling port may be coupled to the cooling port mounting portion of the end plate, and the cooling line may be coupled to the cooling port. For example, a quick connector may be used as the cooling port.

FIG. 8 is a perspective view showing a plurality of battery modules according to the present invention.

Referring to FIG. 8, a structure in which four battery modules 700 are disposed side by side is shown. Although the four battery modules 700 are shown as being spaced apart from each other, the battery modules 700 may be disposed in tight contact with each other in the state in which the battery modules are coupled to each other via the HV connector 300.

The cooling line 510 is coupled to the cooling port 500. An insulating oil is introduced into one side of each of the four battery modules 700, flows along the interior of the battery module in a direction indicated by a dotted arrow, reaches a discharge portion, which is opposite an introduction portion, and is discharged through the discharge portion.

However, the flow of the insulating oil may be changed depending on a method of forming the cooling line. An insulating oil introduction and discharge channel may be constituted by at least one of a series connection structure and a parallel connection structure between the plurality of battery modules.

In addition, LV connectors 400 coupled to the battery cell stacks of the plurality of battery modules are connected to each other, and one end of each of the LV connectors 400 is connected to the BMS.

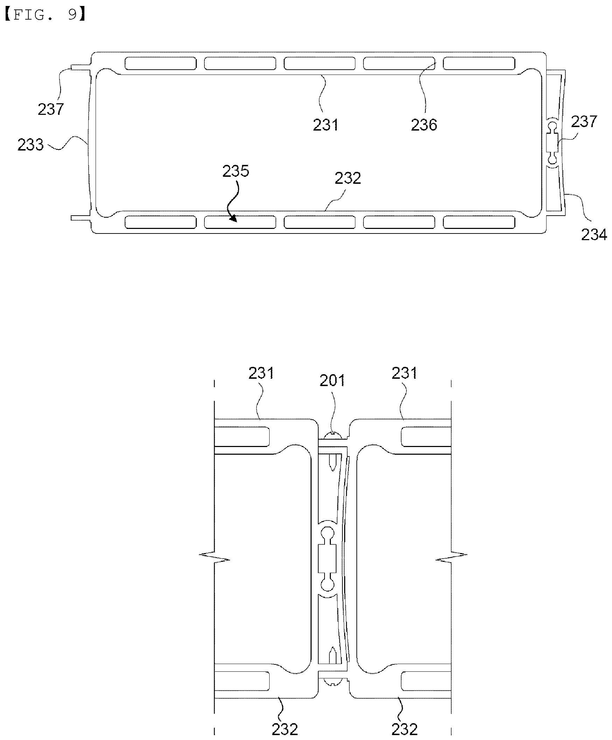

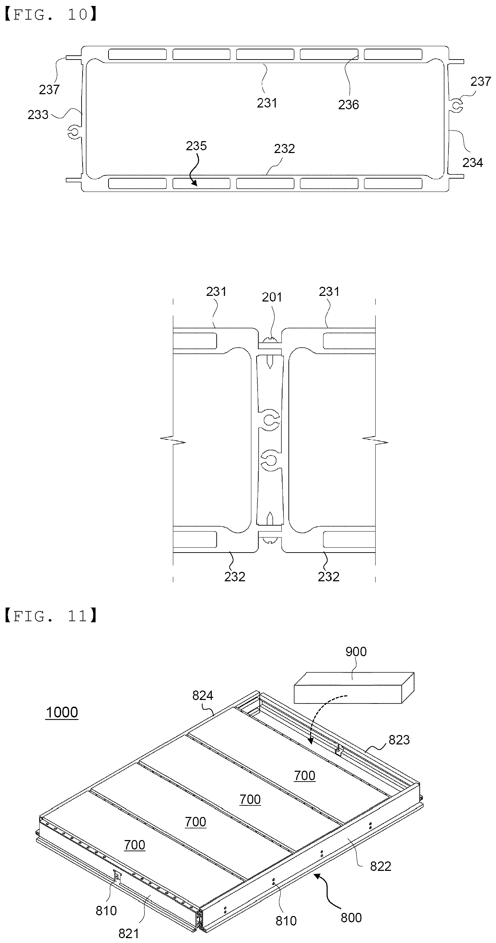

FIG. 9 is a front view of a module housing according to an embodiment, and FIG. 10 is a front view of a module housing according to another embodiment.

Referring to FIGs. 9 and 10, each of the upper surface 231 and the lower surface 232 of the module housing has an empty space 235 provided therein. Since the empty space is provided, as described above, the weight of the module housing may be reduced. In addition, a partition 236 may be formed in each of the upper surface and the lower surface of the module housing, whereby it is possible to secure rigidity of the module housing. As a result, it is possible to manufacture a battery pack not having separate members, such as a battery pack cover and a lower battery pack cover.

The module housing may be formed by extrusion molding, and the module housing may be made of aluminum, carbon steel, stainless steel, or an alloy thereof.

The battery cell stack may repeatedly swell and contract during charging and discharging thereof. In order to absorb swelling of the battery cell stack, a buffer structure 237 is provided on at least one of the first side surface 233 and the second side surface 234.

The module housing includes a screw fastening portion provided at each of the first side surface 233 and the second side surface 234, and the plurality of battery modules may be connected to each other by screws 201 coupled to the screw fastening portions, whereby the plurality of battery modules may be stably fixed.

FIG. 11 is a perspective view of a battery pack according to the present invention.

Referring to FIG. 11, the battery pack 1000 includes a plurality of battery modules 700 disposed such that side surfaces of module housings are adjacent to each other, a BDU 900 disposed at one side of the plurality of battery modules 700, and a battery pack frame 800 configured to envelop the plurality of battery modules 700 and the BDU 900. Each of the plurality of battery modules 700 is electrically connected to a corresponding one of the plurality of battery modules 700 adjacent thereto via an HV connector, and the BDU 900 is connected to the HV connector of the battery module 700 adjacent thereto.

Each of the plurality of battery modules 700 is configured to have a structure in which the upper surface and the lower surface of a module housing 200 of the battery module are exposed in the state in which the plurality of battery modules 700 is mounted in the battery pack frame 800.

The battery pack frame 800 is provided with connection openings 810 formed at positions corresponding to HV connectors and LV connectors mounted to the plurality of battery modules 700.

The battery pack frame 800 may be constituted by a first member 821, a second member 822, a third member 823, and a fourth member 824 connected perpendicularly to each other. The first member 821, the second member 822, the third member 823, and the fourth member 824 may be individual members configured to be detachably coupled to each other.

In addition, each of the first member 821, the second member 822, the third member 823, and the fourth member 824 may include a mounting portion configured to be mounted to a device.

Those skilled in the art to which the present invention pertains will appreciate that various applications and modifications are possible within the category of the present invention based on the above description.

### (Description of Reference Symbols)

- 10, 700:: Battery modules
- 20:: Pack cover
- 30:: Crossbeam
- 40:: Pack tray
- 50:: Pack frame
- 60:: Cooling member
- 70:: Lower cover
- 100:: Battery cell stack
- 110:: First battery cell stack
- 111, 121:: First electrode terminals
- 112, 122:: Second electrode terminals
- 120:: Second battery cell stack
- 130:: Busbar
- 200:: Module housing
- 201, 221:: Screws
- 210:: Through-hole
- 220:: Sealing member
- 231:: Upper surface
- 232:: Lower surface
- 233:: First side surface
- 234:: Second side surface
- 235:: Empty space
- 236:: Partition
- 240:: PCB
- 241:: FPC
- 250:: Sealing plate
- 251:: PCB coupling portion
- 252:: CMC
- 253:: CMC cover
- 260:: End plate
- 300:: HV connector
- 300a:: First HV connector
- 300b:: Second HV connector
- 400:: LV assembly
- 410:: LV connector
- 411:: Terminal portion
- 412:: Terminal portion cover
- 500:: Cooling port
- 510:: Cooling line
- 600:: Insulating oil
- 701:: First battery module
- 702:: Second battery module
- 800:: Battery pack frame
- 810:: Connection opening
- 821:: First member
- 822:: Second member
- 823:: Third member
- 824:: Fourth member
- 900:: BDU
- 1000:: Battery pack

## Claims

1. A battery module comprising:
a battery cell stack comprising a plurality of battery cells;
a module housing accommodating one or more of the battery cell stacks therein disposed in an overall length direction;
a high voltage (HV) connector electrically connecting battery modules to each other;
a low voltage (LV) assembly configured to sense voltage and temperature of the plurality of battery cells;
an insulating oil configured to cool the plurality of battery cells; and
a cooling port configured to allow the insulating oil to be introduced and discharged therethrough,
wherein the insulating oil directly cools the plurality of battery cells while the insulating oil flows through the module housing.

2. The battery module according to claim 1, wherein the module housing comprises an upper surface, a lower surface, a first side surface, and a second side surface, and the HV connector comprises a first HV connector located at the first side surface and a second HV connector located at the second side surface.

3. The battery module according to claim 2, wherein the battery cell stack comprises a first battery cell stack and a second battery cell stack,
a first electrode terminal of the first battery cell stack and a second electrode terminal of the second battery cell stack are connected to the first HV connector, and
a second electrode terminal of the first battery cell stack and a first electrode terminal of the second battery cell stack are connected to the second HV connector.

4. The battery module according to claim 2, wherein the lower surface of the module housing has through-holes extending therethrough under connection portions at which the first HV connector and the second HV connector are connected to the first battery cell stack and the second battery cell stack, each of the through-holes having a sealing member attached thereto, each sealing member being configured to seal the respective through-hole.

5. The battery module according to claim 1, wherein the module housing has connection portions extending therethrough to which the HV connector, the LV assembly, and the cooling port are connected, and each of the connection portions includes a sealing member configured to prevent leakage of the insulating oil.

6. The battery module according to claim 1, wherein the LV assembly comprises an LV connector.

7. The battery module according to claim 6, wherein the LV assembly further comprises at least one selected from a group consisting of: a flexible printed circuit (FPC), a printed circuit board (PCB), or a cell management controller (CMC).

8. A battery pack comprising the battery module according to any one of claims 1 to 7, the battery pack comprising:
a plurality of battery modules disposed such that side surfaces of module housings are disposed adjacent to each other;
a battery disconnect unit (BDU) disposed at one side of the plurality of battery modules; and
a battery pack frame enveloping the plurality of battery modules and the BDU,
wherein each of the plurality of battery modules is electrically connected to a corresponding one of the plurality of battery modules adjacent thereto via an HV connector, and the BDU is connected to the HV connector of the battery module adjacent thereto.

9. The battery pack according to claim 8, wherein each of the module housings comprises a respective screw fastening portion provided at each of a first side surface and a second side surface, and the plurality of battery modules are connected to each other by a screw coupled to the respective screw fastening portions.

10. The battery pack according to claim 8, wherein each of the plurality of battery modules comprises an LV assembly coupled to all battery cell stacks, and the LV assembly is connected to a battery management system (BMS).

11. The battery pack according to claim 8, further comprising an insulating oil introduction and discharge channel comprising at least one of a series connection structure or a parallel connection structure among the plurality of battery modules.

12. The battery pack according to claim 8, wherein each of the plurality of battery modules has a structure in which an upper surface and a lower surface of the module housing are exposed in a state in which the plurality of battery modules is mounted in the battery pack frame.

13. The battery pack according to claim 10, wherein the battery pack frame has connection openings formed at positions corresponding to HV connectors and LV assemblies mounted to the plurality of battery modules.

14. The battery pack according to claim 8, wherein the battery pack frame comprises a first member, a second member, a third member, and a fourth member connected perpendicularly to each other.
